# EUROPEAN PATENT APPLICATION

(11) **EP 3 769 941 A1**
(43) Date of publication of application: **27.01.2021**
(21) Application number: 19188604.3
(22) Date of filing: 26.07.2019
(51) Int. Cl.: B29C 65/78, B29C 65/48, B29C 65/00, F03D 1/06, B29C 65/50, B29C 65/52, B29L 31/08

(54) **GUIDE RAIL SYSTEM FOR PREPARING A WIND TURBINE BLADE**

(71) Applicant: Polytech A/S, 6740 Bramming (DK)
(72) Inventor: Grønkjær, Rune Diederichsen, 6740 Bramming (DK); Vinther, Christian Gejl, 6740 Bramming (DK)
(74) Representative: Hoffmann, Claus

(57) **Abstract**

The present invention relates to a guide rail system for preparing a wind turbine blade (2) for adhesion of one or add-on(s) on the wind turbine blade (2), the wind turbine blade (2) comprising:

a leading edge (3) and a trailing edge (4) having a blade profile (5) between them, a first face (6, 7) and a second face (6, 7), an application surface (8) at the leading edge (3) and/or at the trailing edge (4), a longitudinal extension extending from a root end of the wind turbine blade (2) to a tip end of the wind turbine blade (2), an edge centre (9) indicating a centre of the blade profile (5) along the longitudinal extension either at the leading edge (3) or the trailing edge (4), wherein the guide rail system comprises:

a first elongated mounting profile (32) to be detachably arranged on the first face (6, 7) of the wind turbine blade (2) along the longitudinal extension, and a positioning device (31) for positioning the first mounting profile in a predetermined distance from the edge centre (9).

## Description

The present invention relates to a guide rail system for preparing a wind turbine blade for adhesion of one or more add-on(s) on the wind turbine blade. The present invention also relates to a method for preparing a wind turbine blade for adhesion of one or more add-on(s) on the wind turbine blade by means of the guide rail system.

Add-ons, such as protective covers to be attached to and along the leading edge of a wind turbine blade are known. It has been more and more common to retrofit the wind turbine blades with protective covers when the leading edges have been exerted for erosion.

Since the advantages of attaching protective covers are many, the suppliers of wind turbine blades are also applying the protective covers on new wind turbine blades. This is often performed in production and manufacturing facilities.

It is vital for correct attachment of the protective covers that the surfaces of the wind turbine blade on which the protective covers are to be attached are prepared properly, and that only the surfaces which are going to be covered either by the protective covers and sealant are prepared. Often the preparation process varies from person to person preparing the surfaces which result in a nonuniform result. In the worst case, costly and time-consuming correction work is required. Hence, there is a need for providing a system and method assisting in preparing the application surfaces of the wind turbine blades.

It is an object of the present invention to wholly or partly overcome the above disadvantages and drawbacks of the prior art. More specifically, it is an object to provide an improved guide rail system and method enabling uniform preparation so that the add-ons may be attached properly with no need for subsequent correction work.

The above objects, together with numerous other objects, advantages and features, which will become evident from the below description, are accomplished by a solution in accordance with the present invention a guide rail system for preparing a wind turbine blade for adhesion of one or more add-on(s) on the wind turbine blade, the wind turbine blade comprising:
a leading edge and a trailing edge having a blade profile between them,
a first face and a second face, an application surface at the leading edge and/or at the trailing edge,
a longitudinal extension extending from a root end of the wind turbine blade to a tip end of the wind turbine blade,
an edge centre indicating a centre of the blade profile along the longitudinal extension either at the leading edge or the trailing edge,
wherein the guide rail system comprises:
   a first elongated mounting profile to be detachably arranged on the first face of the wind turbine blade along the longitudinal extension, and
   a positioning device for positioning the first mounting profile in a predetermined distance from the edge centre.

The guide rail system may further comprise a second elongated mounting profile to be detachably arranged on the second face of the wind turbine blade along the longitudinal extension, the positioning device is configured to positioning the second mounting profile in a predetermined distance from the edge centre.

The guide rail system may further comprise a plurality of first elongated mounting profiles and/or a plurality of second elongated mounting profiles.

Moreover, the elongated mounting profiles may be arranged on a predominantly length of the wind turbine blade during the preparation of the application surface of the wind turbine blade.

In addition, each elongated mounting profile may have a first mounting end and a second mounting end, each mounting end comprising connecting means configured to connect a first mounting end of the elongated mounting profile to a second end of an adjacent elongated mounting profile.

Furthermore, the connecting means may be a click-arrangement.

Also, the preparation system may further comprise one or more fixation device(s) configured to maintain the elongated mounting profile(s) in relation to the edge centre.

Moreover, the fixation device may comprise one or more suction cup(s).

In addition, the fixation device may comprise a vacuuming arrangement.

Furthermore, the elongated mounting profiles may be detachably attached to the fixation devices or vice versa.

Also, the fixation device(s) or the elongated mounting profiles may comprise attachment means configured to maintain the elongated mounting profiles in position in relation to the fixation devices.

Additionally, the elongated mounting profile may be a tube or pipe.

Further, the tube or pipe may have a round or square formed cross-section.

Moreover, the elongated mounting profile may comprise a base part to be arranged opposite the face and a flange part configured to project from the base part in a perpendicular direction.

In addition, the flange part may extend along the entire base part.

Furthermore, the elongated mounting profile may be arranged so that the flange part is arranged closest to the leading edge.

Also, the positioning device may comprise a tool for indicating the predetermined distance from the edge centre.

Additionally, a plurality of positioning devices may be used for positioning the elongated mounting profiles.

Further, the positioning device(s) may be detachable.

Moreover, the positioning device may be detachably attached to the fixation devices.

In addition, the positioning device may comprise a strap configured to be connected with the first elongated mounting profile and/or a first fixation device at a first end and with the second elongated mounting profile and/or a second fixation device at a second end, the strap has an indication arranged between the first end and the second end whereby the indication can be aligned with the edge centre.

Furthermore, the indication may be a cut, a line and/or an opening provided in the stra p.

Also, a length of the strap may be adjustable in each end of the strap.

Furthermore, the strap may have different colours, or indicated by signs or numbers, referring to different predetermined lengths of the straps so that the straps may be used on different positions along the longitudinal extension.

Additionally, the elongated mounting profile may be made of a rigid or semirigid material.

Further, the material may be a polymeric material or metal.

The guide rail system may further comprise one or more preparation tools for preparing an application surface of the wind turbine blade at least in an area between the first elongated mounting profile(s) and the second elongated mounting profile(s), or in an area between the first elongated mounting profile(s) and the edge centre.

In addition, the preparation tools may be a tape-dispenser, machining tools, sanding tools, grinders and/or chemical application tools.

Moreover, the first elongated mounting profiles may be identical to the second elongated mounting profiles.

The add-on may be a protective cover, a serrated element or other appendixes configured to be attached to a wind turbine blade.

Furthermore, the add-on may be one or protective cover(s) being affixed to the prepared leading edge by adhesion.

Also, the protective covers may be made of a polyurethane material prepared from a polyol, butanediol, and an isocyanate.

A preparation kit configured to be used in a guide rail system may comprise a plurality of elongated mounting profiles and at least one positioning device.

The preparation kit may also comprise a plurality of fixation devices.

The present invention also relates to a method for preparing a wind turbine blade for adhesion of one or more add-on(s) to the wind turbine blade by means of the guide rail system according to any of claims 1-13, comprising
- positioning a first elongated mounting profile and/or a second elongated mounting profile in a predetermined distance from the edge centre by means of the positioning device,
- fixating the first elongated mounting profile on the first face of the wind turbine blade along the longitudinal extension,
- fixating the second elongated mounting profile on the second face of the wind turbine blade along the longitudinal extension,
- removing the positioning device,
- preparing an area of an application surface between the first elongated mounting profile and the second elongated mounting profile, or an area between the first elongated mounting profile(s) and the edge centre.

Additionally, the positioning step may comprise
- attaching the positioning device to a first fixation device and a second fixation device,
- applying the first fixation device on the first face and the second fixation device on the second face with the predetermined distance from the edge centre.

Further, a plurality of first fixation devices and second fixation devices may be applied along the longitudinal extension with a mutual distance between them.

Moreover, the step with fixation the elongated mounting profiles may comprise attaching the elongated mounting profiles on the fixation devices.

In addition, a masking tape may be applied along the longitudinal extension adjacent to the elongated mounting profiles before preparing the area.

Moreover, the method may further comprise attaching one or more add-ons such as protective covers to the prepared leading edge.

Finally, the invention may also comprise a wind turbine blade prepared by the method as described above.

The invention and its many advantages will be described in more detail below with reference to the accompanying schematic drawings, which for the purpose of illustration show some non-limiting embodiments and in which:
Figs. 1 to 6 show a sequence of preparation of a leading edge according to the present invention,
Fig. 7 shows a part of a wind turbine blade with a plurality of elongated mounting profiles,
Figs. 8 to 10 show an embodiment of a guide rail system,
Fig. 11 shows another embodiment of attachment means,
Fig. 12 shows another embodiment of a guide rail system,
Figs. 13 to 23 show an embodiment of a sequence of a preparation of a leading edge and subsequently attaching protective covers to the leading edge,
Fig. 24 shows a cross-sectional view through a wind turbine blade and a protective cover prior to attachment to the wind turbine blade,
Fig. 25 shows a cross-sectional view through a wind turbine blade and a protective cover after attachment to the wind turbine blade, the dimensions being greatly exaggerated,
Fig. 26 shows a cross-sectional view of an enlarged area of the joint covered by a masking film, the dimensions being greatly exaggerated, and
Fig. 27 shows a cross-sectional view of the enlarged area of the joint of Fig. 26 after the masking film and masking tape have been removed.
Figs. 28 to 31 show a sequence of providing a joint between the protective cover and the wind turbine blade, and
Fig. 32 shows a preparation tool to be used in preparing the leading edge,

All the figures are highly schematic and not necessarily to scale, and they show only those parts which are necessary in order to elucidate the invention, other parts being omitted or merely suggested.

The present invention relates to a guide rail system for preparing a leading edge of a wind turbine blade for adhesion of one or more add-ons such as protective cover(s) to the leading edge. Even though the invention will be described in connection with the preparation of the leading edge of a wind turbine blade, the present invention may also be used in relation to preparing a part of the trailing edge, for instance in connection with applying a serrated element or other appendixes.

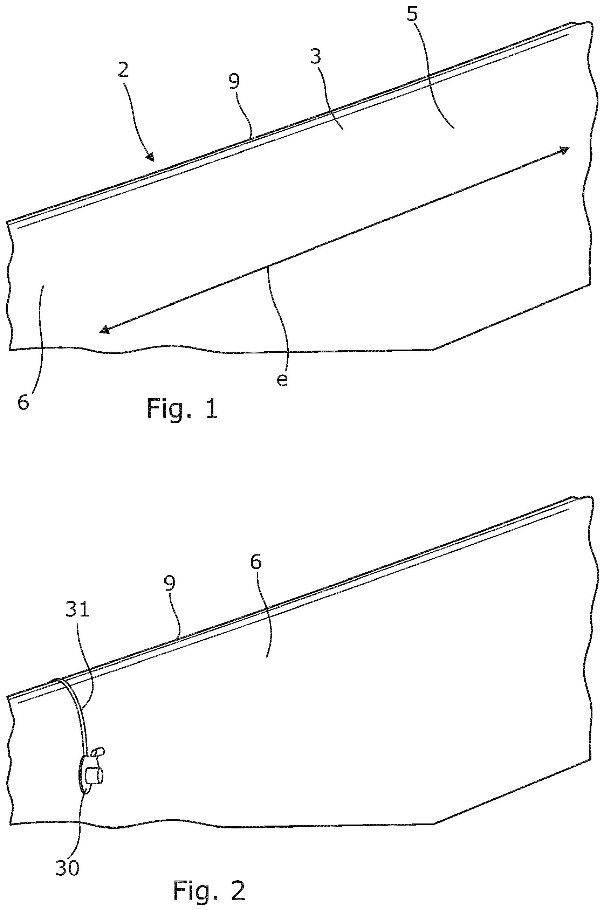

A part of the wind turbine blade 2 is shown in Fig. 1. The wind turbine blade 2 comprises a leading edge 3 and a trailing edge 4 having a blade profile 5 between them. The wind turbine blade 2 further comprises a first face 6 and a second face (not shown in Fig. 1), a longitudinal extension e extending from a root end of the wind turbine blade to a tip end of the wind turbine blade, and an edge centre 9 indicating a centre of the blade profile along the longitudinal extension e at the leading edge 3 or at the trailing edge (not shown).

In Fig. 2, a first fixation device 30 is positioned on the first face 6. The position of the first fixation device 30 is a predetermined distance from the edge centre 9. In the present embodiment, this is obtained by the positioning device 31 in the form of a strap. The positioning device 31, i.e. the strap, connects the first fixation device 30 with a second fixation device (not shown in Fig. 2) positioned on the second face. Hence, the positioning device 31 ensures that two fixation devices may be positioned on opposite sides of the edge centre 9 at the same time. In the present embodiment, the fixation device 31 is a suction cup so that the fixation device is securely fastened to the first face and the second face by activating the suction cups when they are in position.

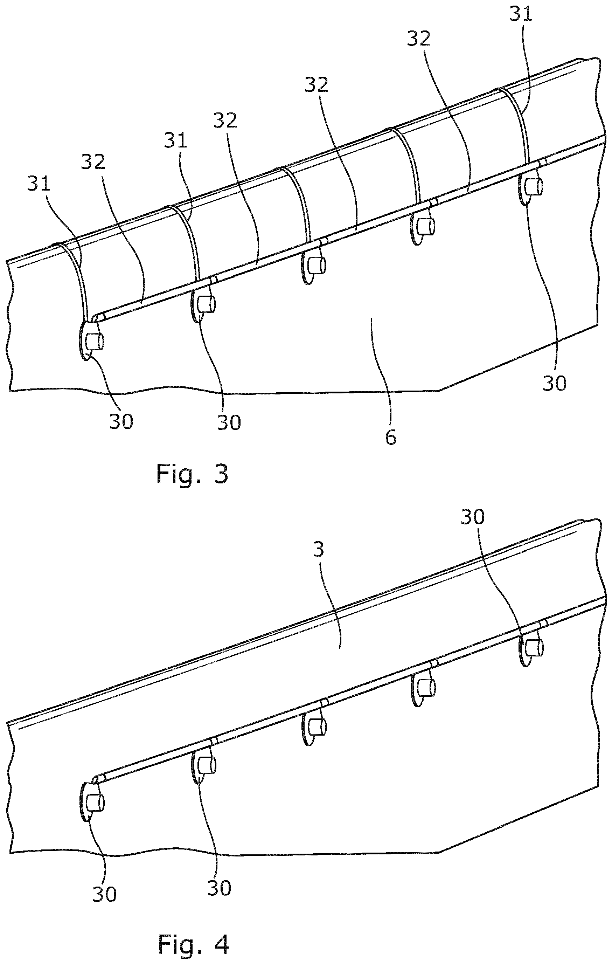

In Fig. 3 a plurality of first fixation devices 30 have been positioned on the first face 6 along the longitudinal extension. In addition, a plurality of positioning devices 31 connect and position the second fixation devices (not shown) with the first fixation devices 30.

The predetermined distance from the edge centre may vary along the longitudinal extension of the wind turbine blade.

In addition, a plurality of first elongated mounting profiles 32 are detachably arranged on the first face 6 of the wind turbine blade along the longitudinal extension as seen in Fig. 3. In the present embodiment, the first elongated mounting profiles are detachably attached to the fixation devices 30 whereby the first elongated mounting profiles 32 are arranged end to end for providing a continuous rail extending along the longitudinal extension in a predetermined distance from the edge centre. The fixation devices 30 ensure that the first elongated mounting profiles are maintained in position.

A plurality of second elongated mounting profiles (not shown) are detachably arranged on the second face of the wind turbine blade along the longitudinal extension in the same manner as described above. In the present embodiment, the first elongated mounting profiles and the second elongated mounting profiles are identical.

Furthermore, in the present embodiment, the elongated mounting profiles are pipes having a round cross-section. The elongated mounting profiles have thereby some rigidity which enables, for instances, tools to be moved along the profiles during the preparation of the application surface at the leading edge.

In Fig. 4, the positioning devices have been detached from the fixation devices 30 so that an area 33 extending along the longitudinal extension between the first elongated mounting profiles and second elongated mounting profiles is defined. After the positioning devices have been removed, the preparation of the leading edge may be started.

By applying the elongated mounting profiles to the first face and second face of the wind turbine blade, a well-defined area to be prepared for the attachment of protective covers has been defined. Hence, the elongated mounting profiles assist the personnel preparing the application surfaces so that a uniform preparation of the leading edge is obtained.

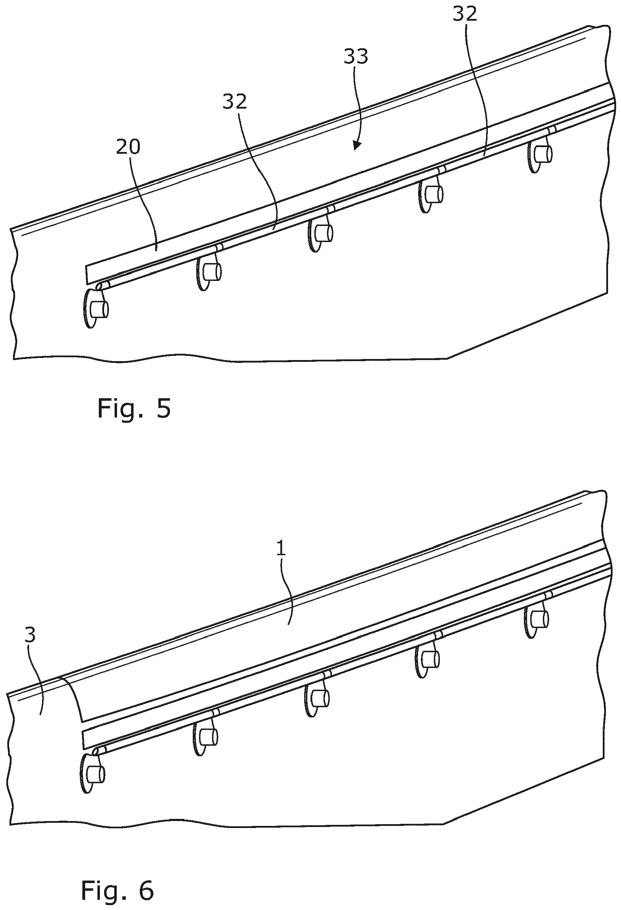

In Fig. 5, a masking tape 20 has been applied to the first face 6 along the elongated mounting profiles 32. The masking tape 20 may be applied by moving a tape dispenser along the elongated mounting profiles so that the masking tape is applied in a uniform manner and in the intended position along the longitudinal extension. Furthermore, the elongated mounting profiles 32 ensure that the masking tape 20 is smooth and without curves in relation to the edge centre. Additionally, the masking tape 20 defines the area 33 to be prepared.

Before attaching the protective cover, the area 33 is prepared by, for instance, sanding the area and activating the application surface by applying a chemical. This will be described further below.

In Fig. 6, the protective cover 1 has been attached to the leading edge 3. This will be described further below.

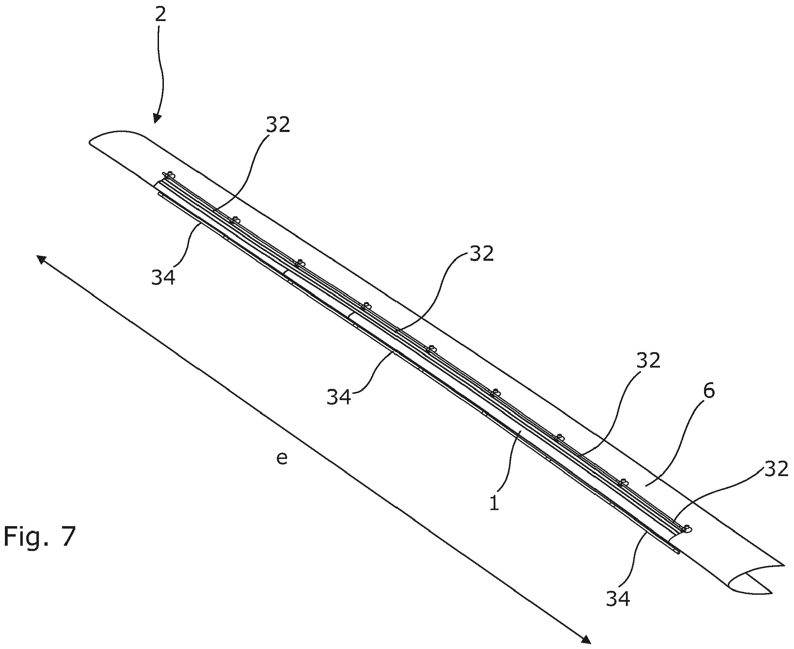

In Fig. 7, a larger view of the wind turbine blade 2 is shown. In addition, the plurality of first elongated mounting profiles 32 are shown attached to the first face 6. Furthermore, the plurality of second elongated mounting profiles 34 are shown. The protective covers 1 have been attached along the longitudinal extension e. As shown in Fig. 7, the elongated mounting profiles 31, 34 are arranged on a predominantly length of the wind turbine blade during the preparation of the leading edge of the wind turbine blade.

Above, it is described that both sides of the leading edge may be prepared at the same time, however, as will be appreciated by the skilled person, it is also possible within the inventive concept to first prepare one side and subsequently prepare the other side.

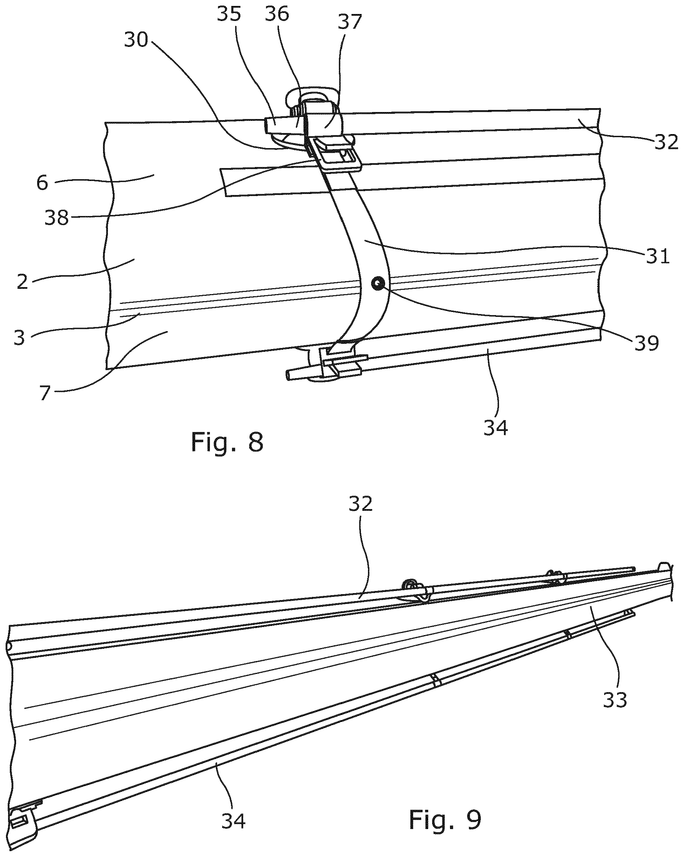

Figs. 8 to 10 show a first embodiment of a guide rail system according to the invention. The guide rail system is similar to the one shown in relation to Figs. 1 to 7.

In Fig. 8, the wind turbine blade 2 is shown from the leading edge 3. The elongated mounting profiles 32, 34 are attached to the first face 6 and the second face 7 via the fixation devices 30. In the present embodiment, the elongated mounting profiles are connected with the fixation devices via attachment means 35 configured to maintain the elongated mounting profiles 32, 34 in position in relation to the fixation devices 30. In the present embodiment, the attachment means 35 are arranged on the fixation device 30. The attachment means 35 comprises two projections 36 which are configured to be inserted into a hollow pipe of the elongated mounting profiles. In Fig. 8, only one projection 36 is visible since the other extends into the elongated mounting profile. Yet another additional elongated mounting profile may be connected with the other projection 36 for providing a longer elongated mounting profile along the longitudinal extension. The two projections 36 are connected via a transition piece 37 which substantially has the same outer diameter as the elongated mounting profile so that a smooth and even elongated mounting profile is obtained along the longitudinal extension.

The positioning device 31 is detachably attached to the fixation devices 30 by a connecting member 38.

In the present embodiment, the positioning device 31 comprises a strap 31 configured to be connected with the first elongated mounting profile and/or a first fixation device at a first end and with the second elongated mounting profile and/or a second fixation device at a second end, the strap has an indication 39 arranged between the first end and the second end whereby the indication can be aligned with the edge centre. In the present embodiment, the indication is an opening or hole provided in the strap, however, in other embodiments the indication may be a cut or a line provided in or on the strap.

Also, a length of the strap may be adjustable in each end of the strap so that the same strap may be used at different positions along the longitudinal extension. The strap may have different colours, signs or numbers referring to different lengths of the strap so that the strap may be used on different positions along the longitudinal extension of the wind turbine blade.

In Fig. 9, the positioning devices have been detached from the fixation devices so that the area 33 is ready for preparation.

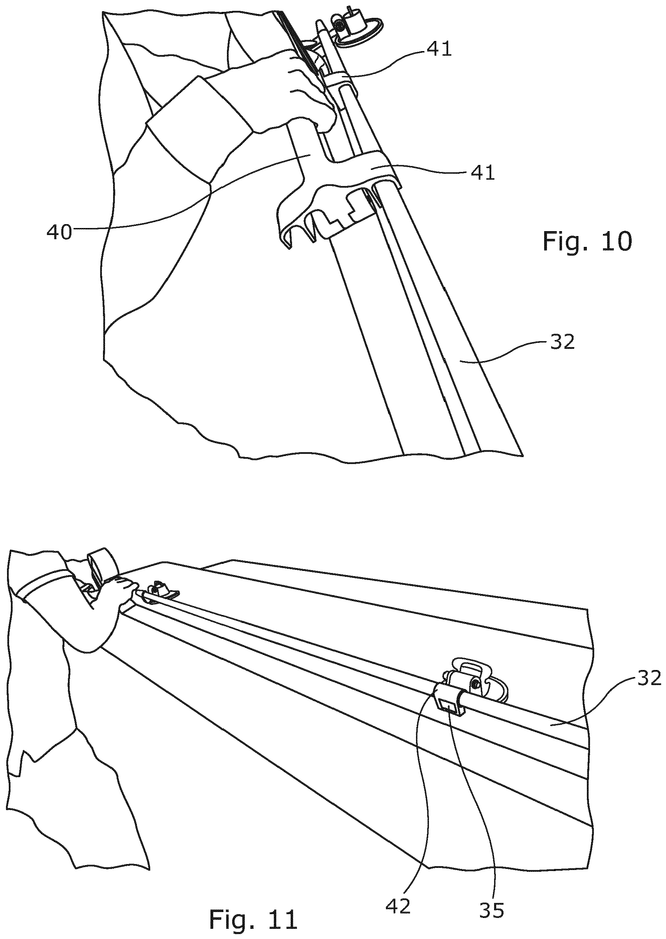

In Fig. 10, an example of a tape dispenser 40 is shown. The tape dispenser 40 comprises connecting parts 41 which are configured to interact with the elongated mounting profiles 32 so that it may slide along the elongated mounting profiles as shown in Fig. 10.

In Fig. 11 another embodiment of the attachment means 35 is shown. In the present embodiment, the attachment means 35 comprises a clamp 42 configured to receive and maintain the elongated mounting profile 32.

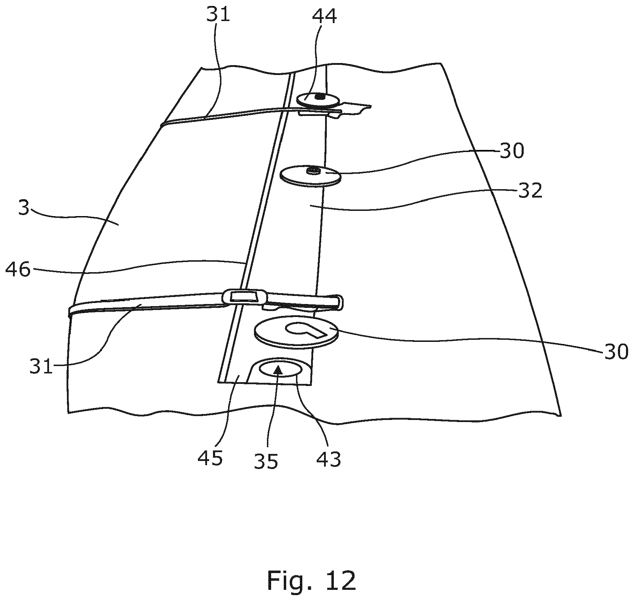

In Fig. 12, another embodiment of a guide rail system is shown. The guide rail system functions similarly to the one previously described, however as shown in Fig. 12, fixation devices 30 and positioning devices 31 are in the present embodiment attached to the elongated mounting profiles 32 meaning that the elongated mounting profiles 32, 34 are arranged on the faces in a predetermined distance from the edge centre. In the present embodiment, each elongated mounting profile 32, 34 has a first mounting end 43 and a second mounting end 44, each mounting end 43, 44 comprising attachment means 35 configured to connect a first mounting end of the elongated mounting profile to a second end of an adjacent elongated mounting profile. The connecting means may for instance be a click-arrangement.

Furthermore, the elongated mounting profile 32, 34 comprises a base part 45 to be arranged opposite the face and a flange part 46 configured to project from the base part in a perpendicular direction, the flange part 46 extending along the entire base part. The elongated mounting profile is arranged so that the flange part 46 is arranged closest to the leading edge 3.

The elongated mounting profile is made of a rigid or semirigid material. The material may be a polymeric material or metal or a combination thereof.

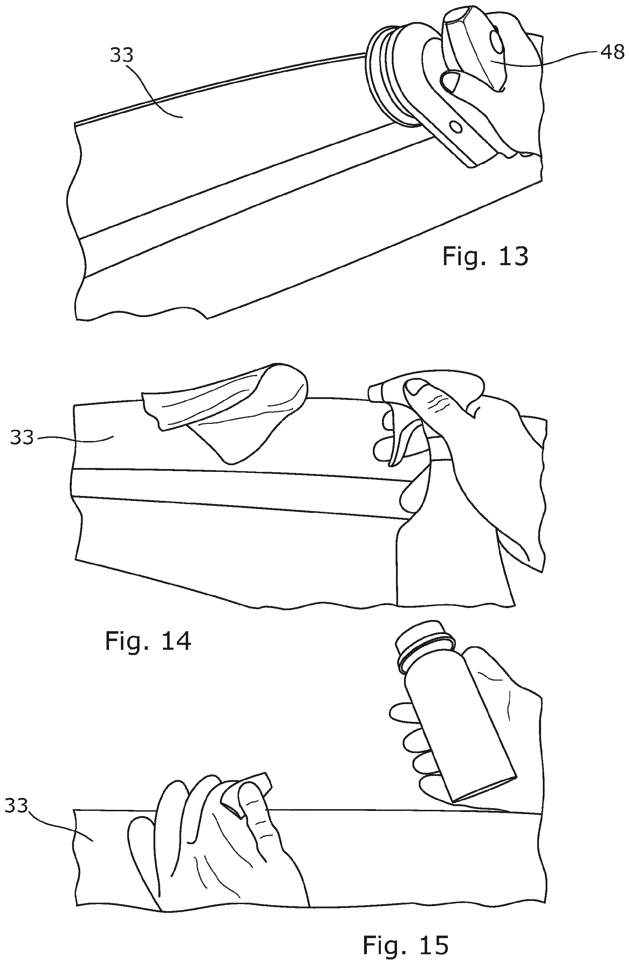

Figs. 13 to 23 show an embodiment of a sequence for preparing a leading edge and subsequently attaching a protective cover to the leading edge. Figs. 13 to 23 do not disclose the guide rail system according to the inventive concept, however, it may be mounted on the wind turbine blade during the attaching of the protective cover, even though not shown.

Fig. 13 shows how the area 33 is sanded by a preparation tool such as an orbital sander 48.

After sanding the area 33, the application surface is cleaned from dust and residue from the sanding process as shown in Fig. 14.

When the area 33 has been cleaned, the application surface of the area is activated by applying a chemical to the application surface as shown in Fig. 15.

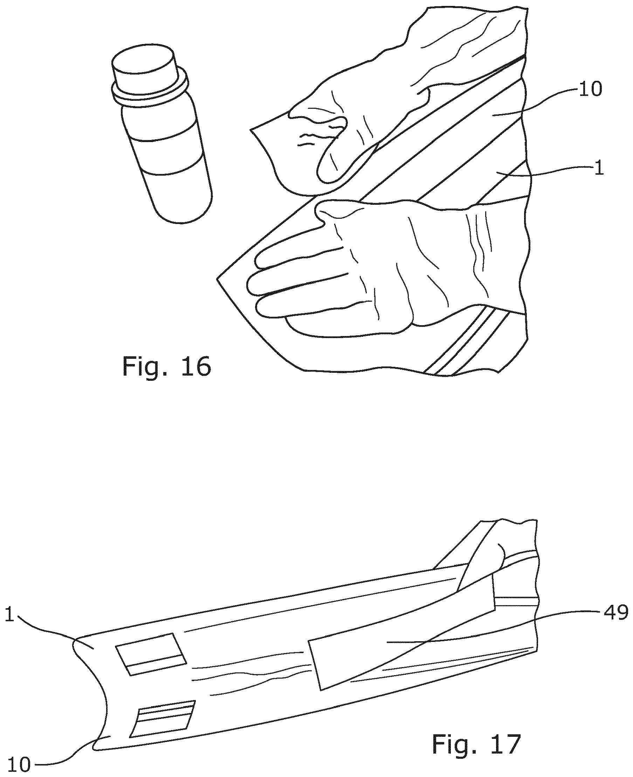

In the same manner, an inside 10 of the protective cover is activated as shown in Fig. 16 by applying a chemical on the inside.

When the inside 10 of the protective cover 1 has been activated, a centre liner 49 is removed from the inside 10 as shown in Fig. 17 so that the protective cover 1 is ready to be attached to the leading edge of the wind turbine blade.

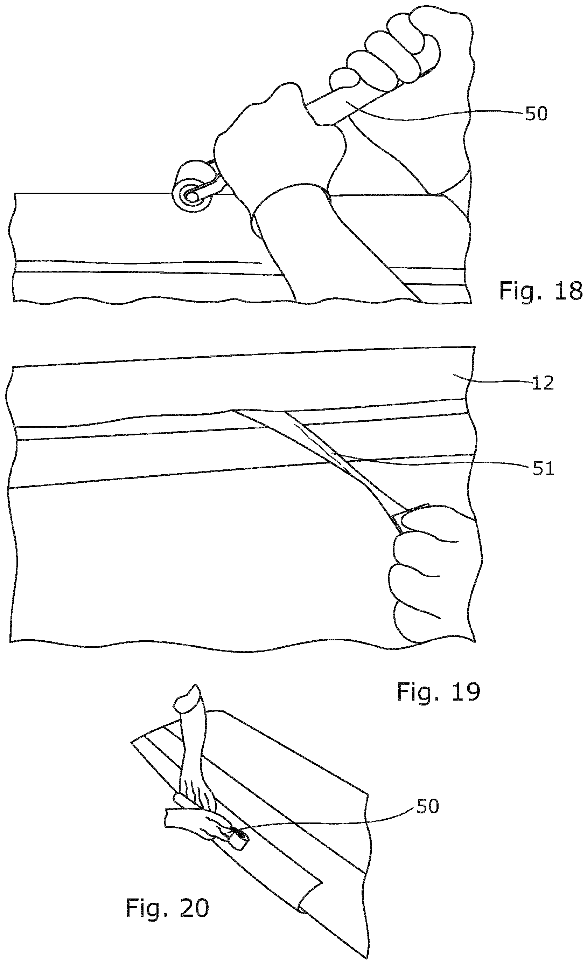

The protective cover 1 is then attached to the leading edge 3 while aligning it with for instance centre markings. Hereinafter, the adhesive on the protective cover is activated by applying pressure with a roller 50 on the leading edge as shown in Fig. 18.

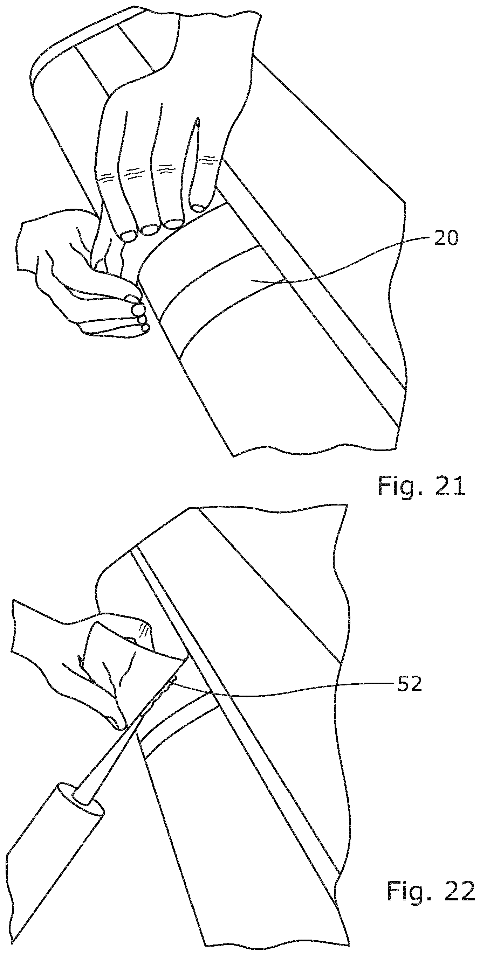

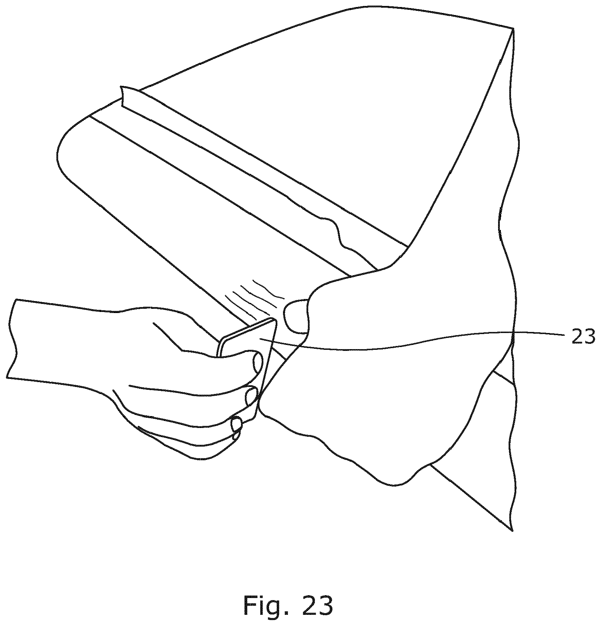

Subsequently, the side liners 51 are removed while squeezing the peripheral cover sections 12 of the protective cover 1 on to the surface as shown in Fig. 19. Then the adhesive on the protective cover is activated by applying pressure with the roller 50 as shown in Fig. 20. A masking tape 20 is applied over an adjacent protective cover so that an overlap seal may be provided as seen in Fig. 21, whereinafter a sealer 52 is applied to this section as shown in Fig. 22. Hereinafter, surplus sealer is squeezed out and the overlap is finished by using a wiper or scraper 23 as shown in Fig. 23.

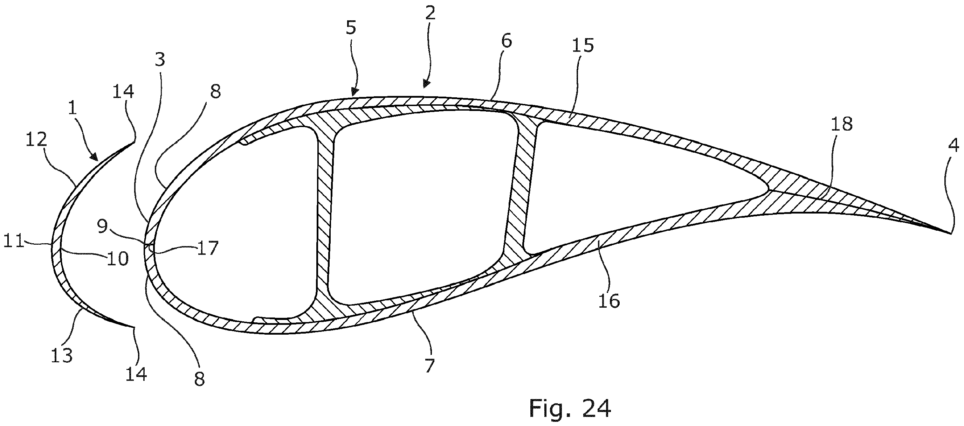

In a cross-sectional view, Fig. 24 shows a protective cover 1 of a preformed type for a wind turbine blade 2. The preformed protective cover 1 may be made of a polymer material, such as a polyether-based polyurethane, however, other materials and reinforcement elements may also be used to make the protective cover.

As mentioned above, the wind turbine blade 2 comprises a leading edge 3 and a trailing edge 4 having a blade profile 5 between them, a first face 6, a second face 7, and an application surface 8 at the leading edge 3 or at the trailing edge. The wind turbine blade also comprises a longitudinal extension, extending from a root end of the wind turbine blade to a tip end of the wind turbine blade and an edge centre 9 indicating a centre of the blade profile along the longitudinal extension at the leading edge or at the trailing edge.

The protective cover 1 is configured to be attached along at least a part of the leading edge 3 along the longitudinal extension by an adhesive applied between an inside 10 of the protective cover 1 and the surface 8 of the leading edge 3 of the wind turbine blade 2.

The protective cover 1 is elongated in a longitudinal direction and has an at least substantially U-formed cross-section as seen in Fig. 24. The protective cover 1 comprises a central cover section 11 extending in the longitudinal direction and two peripheral cover sections 12, 13 extending in the longitudinal direction at either side of the central cover section 11, each peripheral cover section 12, 13 having an outer edge 14.

The central cover section 11 may have a minimum thickness of at least 1 millimetre, and each peripheral cover section 12, 13 may have a thickness decreasing from a maximum thickness of at least 1 millimetre to a minimum thickness of for instance less than 0.5 millimetre.

The particular form of the peripheral cover sections 12, 13 provides for a good transition from the central cover section 11 of the preformed protective cover 1 to the surface of the wind turbine blade 2. A good transition without edges is of great importance in order to avoid that the wind destroys the materials or detaches the protective cover 1 from the surface of the wind turbine blade 2. Furthermore, a good transition is also important in view of air flow across the protective cover and wind turbine blade.

The maximum thickness of each peripheral cover section 12, 13 may correspond to the minimum thickness of the central cover section 11. The minimum thickness of the central cover section 11 may be at least 2 millimetres, preferably at least 3 millimetres, more preferably at least 4 millimetres and most preferably approximately 5 millimetres.

The thickness of the central cover section 11 may be at least substantially constant from side to side of the central cover section 11.

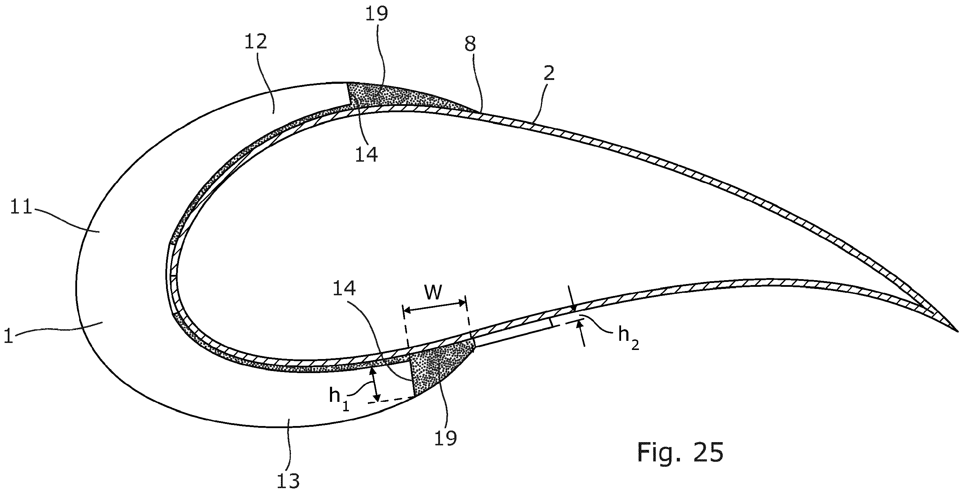

As seen in Fig. 25, the preformed protective cover 1 is configured to be attached along at least a part of the leading edge 3 of the wind turbine blade 2 by adhesion to the application surface 8 of the leading edge 3 of the wind turbine blade 2.

The wind turbine blade 2 may comprise a first blade shell 15 and a second blade shell 16 joined together to form wind turbine blade 2 along a first longitudinal joint 17 at the leading edge 3 of the wind turbine blade 2 and along a second longitudinal joint 18 at the trailing edge 4 of the wind turbine blade 2. The preformed protective cover 1 is configured to be attached at the first longitudinal joint 17 as described above. Since the wind turbine blade is mainly exerted for erosion at the leading edge, the following description will focus on attaching the protective cover to the leading edge. The preformed protective cover 1 may be attached at least approximately symmetrically about the first longitudinal joint 17. The first longitudinal joint 17 coincides with the edge centre 9.

In the following, the attachment of the protective cover is described in relation to one protective cover, however, the entire leading edge may be covered by a plurality of protective covers arranged consecutively along the leading edge 3 of the wind turbine blade 2. Preferably, each protective cover slightly overlaps a neighbouring protective cover section. The protective covers are attached to the wind turbine blade by means of a general-purpose adhesive.

In addition, the protective covers have previously been retro-fitted on wind turbine blades which have been damaged by erosion. However, the protective covers are now being attached to new wind turbine blades before they are being mounted on the wind turbines. Hence, the present invention relates to attaching the protective covers to a wind turbine blade in a manufacturing facility, or at a site where the turbine blade is mounted on the wind turbine.

Fig. 25 shows the method of applying a protective cover 1 on a wind turbine blade 2. However, for illustrative purposes, the dimensions in Fig. 25 are greatly exaggerated. Accordingly, the central cover section 11 has a minimum thickness of at least 1 millimetre, and each peripheral cover section 12, 13 has a thickness decreasing from a maximum thickness of at least 1 millimetre to a minimum thickness at its outer edge 14 of less than 1 millimetre.

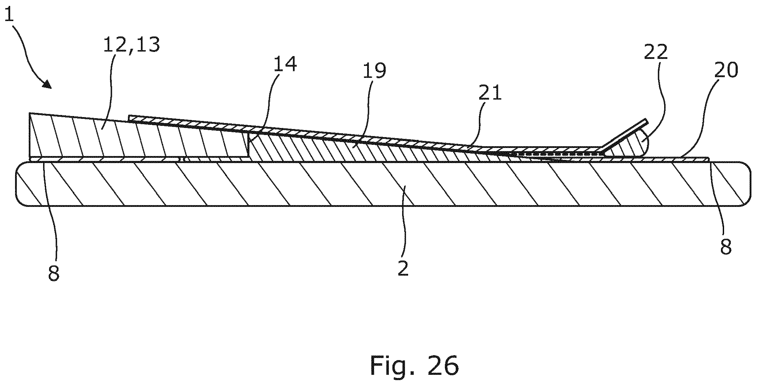

In Fig. 26 a cross-sectional view of an enlarged area of the joint covered by a masking film 21 is shown, the dimensions being greatly exaggerated.

As described above, the masking tape 20 is detachably applied along the longitudinal extension on the application surface 8 in a predetermined distance from the edge centre (not shown). The joint 19 made of a sealant is provided at least between the outer edges 14 of the protective cover 2 and the masking tape 20 in the longitudinal extension, the joint 19 is formed to taper from the protective cover 2 towards the masking tape 20.

Preferably, the joint 19 or sealing has a width W from the outer edge 14 of the peripheral cover section 12, 13 to the position where it ends at the surface 8 of the longitudinal edge of the wind turbine blade 2 and said width W is between 10 and 75 millimetres, preferably between 20 and 50 millimetres.

Furthermore, a masking film 21 is detachably attached to the protective cover 2 at the outer edges 14, the masking film 21 extends across the sealant and a part of the masking tape 20 during forming and curing of the joint. As described above, the sealant may also be applied between the inside of the protective cover and the surface.

Surplus sealant 22 may, during the forming of the joint 19, be squeezed out on the masking tape 20 under the masking film 21 thereby facilitating the removal of the surplus sealant.

The masking film 21 may be made of a polymeric material. Furthermore, it may have permeable properties so that curing of the sealant below the masking film 21 is enhanced.

The masking film may have a film adhesive for detachably attaching the masking film to the protective cover, and/or the masking film is detachably attached to the protective cover by applying a masking tape partly overlapping the masking film and the protective cover.

Furthermore, the masking film may be configured to be positioned across the sealant and is used to form the joint with the intended inclination and surface finish.

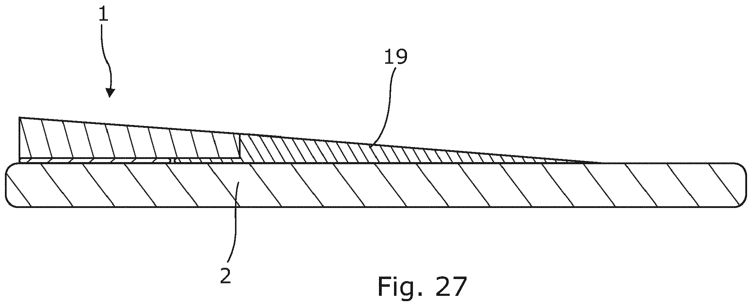

In Fig. 27 the protective cover 1 is shown attached to the wind turbine blade 2, and the joint 19 tapers from the protective cover towards the wind turbine blade. The masking film and the masking tape have been removed.

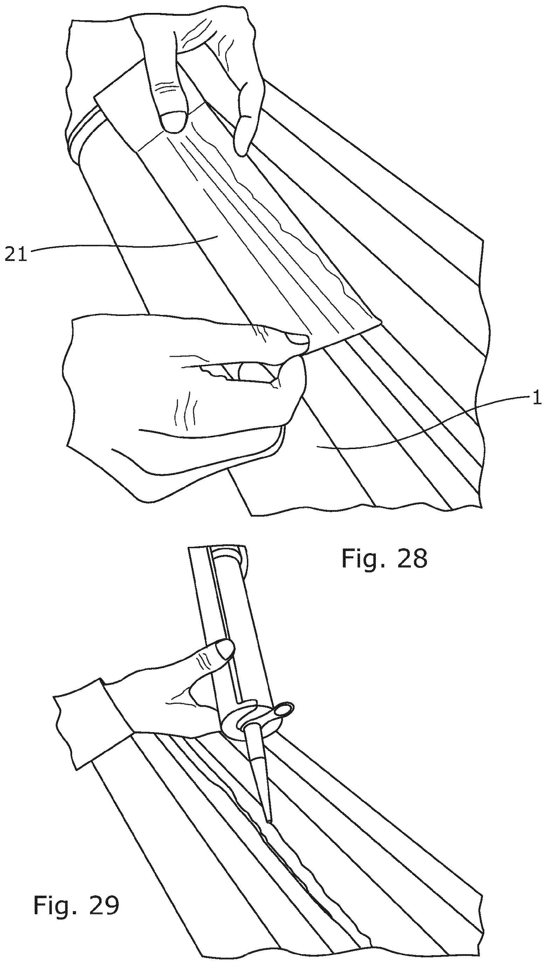

Figs. 28 to 31 show a sequence of proving the joint between the protective cover and the face of the wind turbine blade. In Fig. 28, the masking film 21 is being applied to the protective cover 1. Hereinafter, the outer edge of the protective cover is lifted so that a sealant may be applied below the outer edge as shown in Fig. 29.

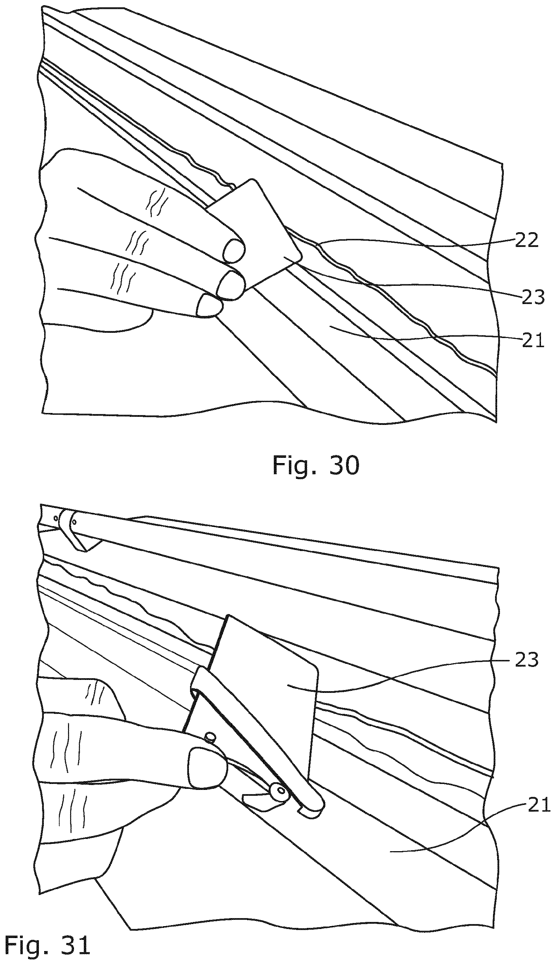

In Fig. 30, the sealant is covered by the masking film 21 and the surplus sealant is squeezed out by use of the scraper 23. In Fig. 31, the joint is provided under the masking film 21 so that the joint tapers from the protective cover to the masking tape. The joint is formed and smoothened by using a scraper 23 on the sealant from the opposite side of the masking film 21 in relation to the sealant so that direct contact between the scraper 23 and the sealant is avoided.

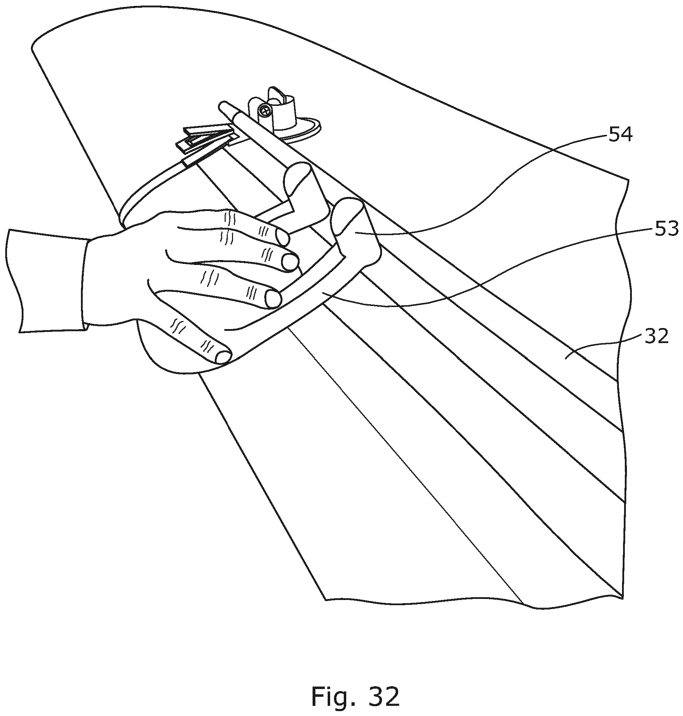

In Fig. 32, another preparation tool is shown, the preparation tool is in this embodiment a sander 53 having protrusion members 54. The protrusion members are configured to ensure that the sander is kept at a preparation distance from the elongated mounting profile 32 so that it is avoided that areas of the wind turbine blade not are sanded unintendedly.

Although the invention has been described in the above in connection with preferred embodiments of the invention, it will be evident for a person skilled in the art that several modifications are conceivable without departing from the invention as defined by the following claims.

## Claims

1. A guide rail system for preparing a wind turbine blade (2) for adhesion of one or more add-on(s) (1) on the wind turbine blade (2), the wind turbine blade (2) comprising:
a leading edge (3) and a trailing edge (4) having a blade profile (5) between them,
a first face (6) and a second face (7), an application surface (8) at the leading edge and/or at the trailing edge,
a longitudinal extension extending from a root end of the wind turbine blade to a tip end of the wind turbine blade,
an edge centre (9) indicating a centre of the blade profile along the longitudinal extension either at the leading edge or the trailing edge,
wherein the guide rail system comprises:
a first elongated mounting profile (32) to be detachably arranged on the first face (6) of the wind turbine blade along the longitudinal extension, and
a positioning device (31) for positioning the first mounting profile in a predetermined distance from the edge centre (9).

2. A guide rail system according to claim 1, further comprising a second elongated mounting profile (34) to be detachably arranged on the second face (7) of the wind turbine blade along the longitudinal extension, the positioning device (31) being configured to positioning the second mounting profile in a predetermined distance from the edge centre.

3. A guide rail system according to claim 1 and/or 2, further comprising a plurality of first elongated mounting profiles (32) and/or a plurality of second elongated mounting profiles (34).

4. A guide rail system according to any of the preceding claims, wherein each elongated mounting profile (32, 34) has a first mounting end (43) and a second mounting end (44), each mounting end comprising connecting means configured to connect a first mounting end of the elongated mounting profile to a second end of an adjacent elongated mounting profile.

5. A guide rail system according to any of the preceding claims, further comprising one or more fixation device(s) (30) configured to maintain the elongated mounting profile(s) in relation to the edge centre (9).

6. A guide rail system according to claim 5, wherein the elongated mounting profiles (32, 34) are detachably attached to the fixation devices (30) or vice versa.

7. A guide rail system according to claim 5 and/or 6, wherein the fixation device(s) (30) and/or the elongated mounting profiles (32, 34) comprise attachment means configured to maintain the elongated mounting profiles in position in relation to the fixation devices.

8. A guide rail system according to any of the preceding claims, wherein the elongated mounting profile (32, 34) is a tube or pipe.

9. A guide rail system according to any of the preceding claims, wherein the positioning device(s) (31) is/are detachable.

10. A guide rail system according to any of the preceding claims, wherein the positioning device (31) comprises a strap (31) configured to be connected with the first elongated mounting profile (32) and/or a first fixation device (30) at a first end and with the second elongated mounting profile (34) and/or a second fixation device (30) at a second end, the strap having an indication (39) arranged between the first end and the second end whereby the indication (39) can be aligned with the edge centre (9).

11. A guide rail system according to claim 10, wherein the indication (39) is a cut, a line and/or an opening provided in the strap.

12. A guide rail system according to claim 10 and/or 11, wherein a length of the strap (31) is adjustable at each end of the strap.

13. A guide rail system according to any of the preceding claims, further comprising one or more preparation tools for preparing the application surface (8) of wind turbine blade at least in an area (33) between the first elongated mounting profile(s) (32) and the second elongated mounting profile(s) (34), or an area (33) between the first elongated mounting profile(s) (32) and the edge centre (9).

14. A method for preparing a wind turbine blade (2) for adhesion of one or more add-on(s) (1) on the wind turbine blade (2) by means of the guide rail system according to any of claims 1-13, comprising
- positioning a first elongated mounting profile (32) and/or a second elongated mounting profile (34) in a predetermined distance from the edge centre (9) by means of the positioning device (31),
- fixating the first elongated mounting profile (32) on the first face (6) of the wind turbine blade along the longitudinal extension,
- fixating the second elongated mounting profile (34) on the second face (7) of the wind turbine blade along the longitudinal extension,
- removing the positioning device (31),
- preparing an area (33) of an application surface (8) between the first elongated mounting profile (32) and the second elongated mounting profile (34), or an area (33) between the first elongated mounting profile(s) (32) and the edge centre (9).

15. A method according to claim 14, wherein the positioning step comprises
- attaching the positioning device (31) to a first fixation device (30) and a second fixation device (30),
- applying the first fixation device (30) on the first face (6) and the second fixation device (30) on the second face (7) with the predetermined distance from the edge centre (9).
